Europäisches Patentamt

European Patent Office

Office européen des brevets

(19)

(11) Numéro de publication: **0 220 078**
**B1**

(12) **FASCICULE DE BREVET EUROPEEN**

(45) Date de publication du fascicule du brevet:
07.12.88

(51) Int. Cl.⁴: **B 60 T 13/24**

(21) Numéro de dépôt: **86401814.8**

(22) Date de dépôt: **14.08.86**

(54) Servomoteur d'assistance au freinage comprenant une butée de plongeur de valve en fil métallique.

(30) Priorité: **19.09.85 FR 8513904**

(43) Date de publication de la demande:
**29.04.87 Bulletin 87/18**

(45) Mention de la délivrance du brevet:
**07.12.88 Bulletin 88/49**

(84) Etats contractants désignés:
**DE GB IT**

(56) Documents cités:
**FR-A- 1 389 743**
**FR-A- 2 569 246**
**GB-A- 2 076 488**

(73) Titulaire: **BENDIX France, 126, rue de Stalingrad, F-93700 Drancy (FR)**

(72) Inventeur: **Blot, Jean-Claude, 37, rue Jules Fossier, F-95380 Louvres (FR)**

(74) Mandataire: **Lejet, Christian et al, Division Technique Service Brevets BENDIX Europe 126, rue de Stalingrad, F-93700 Drancy (FR)**

ACTORUM AG

## Description

La présente invention concerne les servomoteurs d'assistance au freinage du type comportant un piston d'assistance pourvu d'un moyeu tubulaire renfermant un moyen de valve de distribution actionné par un plongeur de valve, mobile axialement dans le moyeu et couplé à une tige d'entrée du servomoteur, et une clé de butée pour plongeur de valve, constituée à partir d'un fil métallique et montée élastiquement sur le moyeu avec au moins une partie de butée de la clé reçue dans un évidement radial du moyeu pour coopérer en engagement avec le plongeur de valve afin d'en limiter le déplacement dans le moyeu.

Un servomoteur d'assistance au frainage de ce type est décrit dans la demande de brevet français n° 8 412 864 (FR-A-2 569 246), au nom de la Demanderesse, dont le contenu est supposé intégré ici pour référence. Dans ce document, la partie de butée de la clé est formée par une partie centrale en forme de C ou de Y introduite radialement dans l'évidement radial du moyeu qui doit être largement dimensionnée en conséquence, le maintien en position de la clé dans le moyeu étant assuré par des bras latéraux coopérant en engagement élastique avec la périphérie extérieure du moyeu. Cet agencement convient parfaitement pour des pistons d'assistance réalisés, de façon classique, en bakélite. Les évolutions des matériaux plastiques amènent les constructeurs à opter de préférence pour la réalisation des pistons d'assistance en matériaux thermo-plastiques plus légers mais qui imposent des restrictions dimensionnelles pour les ouvertures ou passages internes dans le moyeu.

La présente invention a pour objet de proposer un nouvel agencement de moyeu de piston d'assistance et d'une clé de butée de plongeur de conception simple, robuste et fiable, de faible coût de fabrication, offrant un encombrement minimum, permettant une mise en place aisée et rapide de la clé de butée dans le moyeu tout en assurant un positionnement et un maintien parfait de la clé en position dans le moyeu.

Pour ce faire, selon l'invention, le moyeu de piston d'assistance comporte deux évidements radiaux opposés et la clé comporte deux parties de butée en vis à vis reliées par une arche intermédiaire, chaque évidement radial comprenant une partie centrale de réception de la partie de butée de la clé et une partie d'accès débouchant extérieurement, la distance transversale entre les zones de raccordement entre les parties centrales de réception et les parties d'accès des deux évidements radiaux étant supérieure à l'écartement entre les parties d'appui en vis à vis de la clé.

Des servomoteurs d'assistance comportant deux évidements radiaux opposés dans le moyeu sont déjà connus, par exemple du document GB-A-2 076 488. L'agencement du servomoteur de ce document met toutefois en oeuvre deux clés de butée indépendantes, insérées chacune dans l'évidement radial correspondant, suivant un agencement onéreux, notamment en ce qui concerne les coûts de montage, des moyens externes devant en outre être prévus pour maintenir chacune des clés en position dans son évidement radial.

Avec un agencement selon l'invention, les dimensions des parties centrales de réception des parties de butée de la clé peuvent être réduites au minimum, le montage élastique de la clé sur le moyeu s'effectuant perpendiculairement aux évidements radiaux opposés en forçant la partie de voile du moyeu entre les deux évidements, d'un côté ou de l'autre du moyeu, entre les parties de butée de la clé, un complément de déplacement radial vers l'intérieur de la clé permettant aux parties de butée de venir se loger dans les parties centrales de réception des évidements, lesquelles sont avantageusement conformées de façon à réaliser, avec des formations correspondantes de la clé, un verrouillage en position correcte de la clé dans le moyeu.

D'autres caractéristiques et avantages de la présente invention ressortiront de la description suivante d'un mode de réalisation, donné à titre illustratif mais nullement limitatif, faite en relation avec les dessins annexés, sur lesquels:

la fig. 1 est une vue partielle, partiellement en coupe longitudinale, d'un moyeu de servomoteur d'assistance pourvu d'une clé selon l'invention; et

la fig. 2 est une vue en coupe transversale suivant le plan de coupe II-II de la fig. 1.

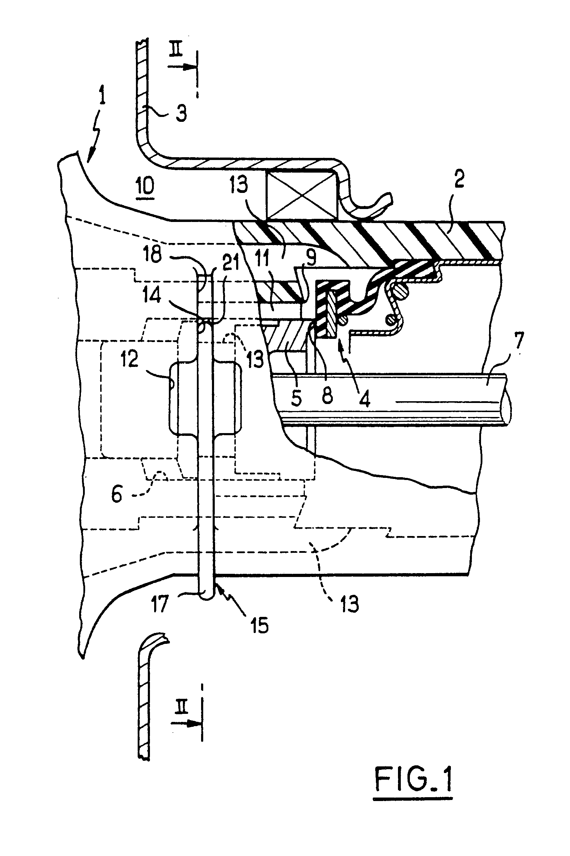

On reconnaît sur la fig. 1 la partie centrale d'un piston d'assistance 1 formant un moyeu tubulaire 2 monté à coulissement étanche dans la coquille arrière 3 du boîtier d'un servomoteur pneumatique d'assistance au freinage. Dans le moyeu tubulaire 2 est disposé un moyen de valve de distribution 4 actionné par un plongeur de valve 5 coulissant dans un alésage étagé central 6 du moyeu 2 et couplé à l'extrémité d'une tige d'entrée 7 du servomoteur couplée typiquement, à son autre extrémité, à une pédale de freinage d'un véhicule automobile (non représentée). Le moyen de valve 4 est ainsi agencé de façon à coopérer sélectivement avec un premier siège de clapet 8 formé par le plongeur de valve 5 et avec un second siège de clapet coaxial 9 formé dans le moyeu 2 autour du plongeur 5. La coopération entre le moyen de valve 4 et le premier siège de clapet 8 interrompt sélectivement la communication avec la chambre arrière 10 du servomoteur, entre la coquille arrière 3 et le piston 1, via des premiers canaux 11 formés dans le moyeu, autour du plongeur 5, et communiquant avec la chambre arrière 10 par des ouvertures radiales 12 dans le moyeu 2, la coopération entre le moyen de valve 4 et le second siège de clapet 9 interrompant sélectivement la communication avec la chambre avant du servomoteur (en avant du piston d'assistance 1) via des seconds canaux 13 formés longitudinalement dans le moyeu 2 et débouchant dans la face avant du piston d'assistance (non représentée).

Le plongeur de valve 5 comporte une gorge annulaire périphérique 13 définissant, à sa partie antérieure, un épaulement de butée 14 destiné à coopérer avec une clé butée, désignée généralement par la référence 15, montée élastiquement sur le moyeu de la façon qui va maintenant être décrite.

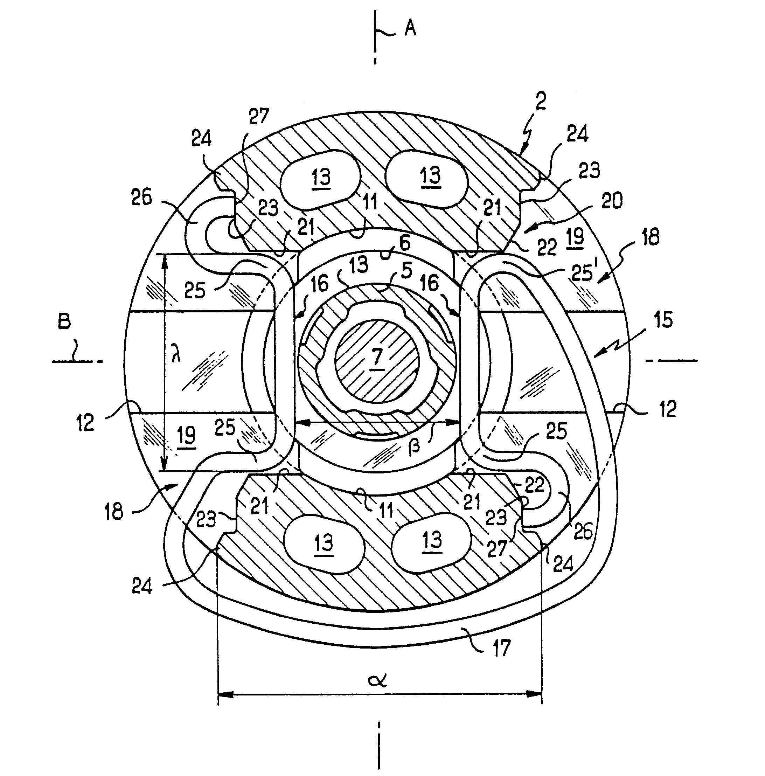

Comme on le voit bien sur la fig. 2, la clé de butée selon l'invention est réalisée par la mise en forme d'un fil métallique élastique, typiquement un fil d'acier à ressort d'un diamètre de l'ordre de 1,5 mm.

La clé 15 comporte essentiellement deux parties de butée 16, se présentant avantageusement sous la forme de brins rectilignes parallèles, reliés continûment l'un à l'autre par une arche intermédiaire 17. Pour recevoir la clé 15, le moyeu 2 comporte deux évidements radiaux opposés sous la forme de fentes 18 communiquant intérieurement avec l'alésage étagé 6 dans lequel coulisse le plongeur 5. Chaque évidement radial est conformé pour constituer une partie d'accès droite 19 et une partie centrale, désignée généralement par la référence 20, de réception d'une des parties de butée 16 de la clé 15. La clé 15 présentant une configuration générale plane, les évidements radiaux 18, symétriques par rapport à un premier plan axial médian A du moyeu, ont une largeur axiale sensiblement constante légèrement supérieure à l'épaisseur du fil de la clé 15.

Selon une caractéristique particulière de l'invention, les évidements radiaux 18 sont également symétriques par rapport à un second plan axial médian B du moyeu perpendiculaire au premier plan médian A. Ainsi, la partie centrale de réception 20 comporte centralement un chenal rectangulaire défini par deux faces transversales en vis à vis 21 parallèles au plan médian B s'évasant vers l'extérieur par des rampes 22 pour former deux épaulements co-planaires 23 parallèles au plan A. Ces épaulements 23 se raccordent à la partie d'accès 19 en formant des redans 24 dont l'écartement, parallèlement au plan B, est supérieur à l'écartement entre les parties d'appui 16 de la clé 15.

Chaque partie d'appui 16 de la clé est prolongée, à chaque extrémité, par un arrondi 25, 25' s'étendant vers l'extérieur, la hauteur hors tout entre les bords externes des arrondis (identique pour les deux parties de butée de la clé) étant légèrement inférieure à la distance entre les faces en vis à vis 21 de la partie centrale de réception 20 des évidements radiaux 18, ce qui garantit ainsi un positionnement parfaitement centré des parties de butée dans le moyeu.

Selon une autre caractéristique de l'invention, l'arrondi 25 à une extrémité de chaque partie de butée 16 se prolonge par une crosse 26 repliée vers l'intérieur dont l'extrémité libre 27 vient en appui contre la surface de butée correspondante 23 de la partie centrale de réception 20 de l'évidement radial correspondant, de façon à garantir ainsi un positionnement parfaitement centré par rapport au plan A des parties de butée 16 évitant notamment à celles-ci de frotter contre le fond de la gorge 13 du plongeur 5.

Dans le mode de réalisation préféré représenté sur la fig. 2, les crosses 26 sont formées en opposition pour les deux parties de butée 16, l'une de celles-ci (à gauche sur la fig. 2) se raccordant directement, via son arrondi 25, l'arche intermédiaire 17, l'autre partie de butée (à droite sur la fig. 2) se raccordant à l'arche intermédiaire 17 via un arrondi 25' en épingle à cheveu. On comprendra que, avec un tel agencement, la clé 15 peut être mise en place dans le moyeu indifféremment par insertion radiale vers le haut (comme représenté), ou symétriquement, vers le bas, la symétrie des évidements radiaux 18 garantissant dans tous les cas un positionnement direct, correct et équilibré, en raison des appuis antagonistes haut et bas des deux crosses 26 contre les surfaces d'appui correspondantes 27 l'arche intermédiaire 17 pontant extérieurement la partie de voile du moyeu entre les redans 24 et étant partiellement reçue et maintenue axialement dans les parties d'accès 19 des évidements 18. En variante, on peur toutefois réaliser la clé avec deux parties symétriques ayant soit la configuration de la partie gauche, soit la configuration de la partie droite de la fig. 2.

On remarquera, sur les figures, que l'agencement selon l'invention permet de réaliser des seconds canaux 13 symétriquement de part et d'autre du plan B et de réaliser des ouvertures d'accès 12 pour les premiers canaux 11 également symétriques, mais par rapport au plan A, et d'une extension axiale relativement importante, dans un agencement général offrant des sections de passage de fluide agrandies vers le moyen de valve 4 sans affecter les caractéristiques de tenue mécanique du piston 1, 2.

## Revendications

1. Servomoteur d'assistance au freinage, comportant un piston d'assistance (1) pourvu d'un moyeu tubulaire (2) renfermant un moyen de valve de distribution (4) actionné par un plongeur de valve (5) mobile axialement dans le moyeu et couplé à une tige d'entrée (7) du servomoteur, et une clé de butée (15) pour le plongeur (5) constituée à partir d'un fil métallique et montée élastiquement sur le moyeu (2) avec au moins une partie de butée (16) de la clé (15) reçue dans un évidement radial (18) du moyeu (2) pour coopérer en engagement avec le plongeur (5), caractérisé en ce que le moyeu (2) comporte deux évidements radiaux opposés (18) et en ce que la clé (15) comporte deux parties de butée (16) en vis à vis reliées par une arche intermédiaire (17), chaque évidement radial (18) comprenant une partie centrale (20) de réception de la partie de butée (16) de la clé (15) et une partie d'accès (19) débouchant extérieurement, la distance transversale ($\alpha$) entre les zones de raccordement (24) entre les parties centrales (20) et les parties d'accès (19) des deux évidements radiaux (18) étant supérieures à l'écartement ($\beta$) entre les parties de butée (16) en vis à vis de la clé (15).

2. Servomoteur selon la revendication 1, caractérisé en ce que chaque partie de butée (16) est prolongée par une portion d'extrémité (26) venant en appui (27) contre une surface d'appui (23) de la partie centrale de réception (20) de l'évidement radial (18).

3. Servomoteur selon la revendication 1 ou la revendication 2, caractérisé en ce que chaque partie de butée (16) de la clé (15) est constituée par une portion de brin sensiblement rectiligne prolongée, à chaque extrémité, par un arrondi (25, 25'), la partie centrale de réception (20) de l'évidement radial (18) ayant une hauteur légèrement supérieure à la distance hors tout ($\lambda$) entre les bords externes des arrondis (25, 25').

4. Servomoteur selon l'une des revendications précédentes, caractérisé en ce que la clé (15) est sensiblement plane.

5. Servomoteur selon la revendication 4, caractérisé en ce que les évidements radiaux (18) ont chacun une largeur axiale sensiblement constante et légèrement supérieure à l'épaisseur du fil de la clé (15).

6. Servomoteur selon la revendication 5, caractérisé en ce que les deux évidements radiaux (18) sont symétriques par rapport à un premier plan axial médian (A) du moyeu (2).

7. Servomoteur selon la revendication 6, caractérisé en ce que les évidements radiaux (18) sont symétriques par rapport à un second plan axial médian (B) du moyeu (2) perpendiculaire au premier plan axial médian (A).

**Patentansprüche**

1. Servomotor für eine Bremsanlage, mit einem Servokolben (1), dessen rohrförmige Nabe (2) eine Verteilerventilvorrichtung (4) umschliesst, die durch einen in axialer Richtung in dem Mittelteil (2) beweglichen und mit einer inneren Achse (7) des Servomotors in Verbindung stehenden Ventilstössel (5) betätigt wird, und mit einem Anschlagsteil (15) für den Stössel (5), das aus einem Metalldraht besteht und elastisch auf der Nabe (2) angeordnet ist, wobei mindestens ein Anschlagsabschnitt (16) des Anschlagsteiles (15) in einer radialen Ausnehmung (18) der Nabe (2) aufgenommen ist, um mit dem Stössel (5) zusammenzuwirken, dadurch gekennzeichnet, dass die Nabe (2) zwei radiale, einander gegenüberliegend angeordnete Ausnehmungen (18) aufweist und dass das Anschlagsteil (15) zwei gegenüberliegende Anschlagsabschnitte (16) enthält, die über einen dazwischen angeordneten Bogen (17) miteinander verbunden sind, wobei jede radiale Ausnehmung (18) einen zentralen Bereich (20) zur Aufnahme des Anschlagsabschnittes (16) des Anschlagsteiles (15) und einen nach aussen mündenden Zugangsbereich (19) aufweist und wobei in Querrichtung gesehen der Abstand (α) zwischen den Übergangsbereichen (24) zwischen den zentralen Bereichen (20) und den Zugangsbereichen (19) der radialen Ausnehmungen (18) grösser ist als der Abstand (β) zwischen den gegenüberliegenden Anschlagsabschnitten (16) des Anschlagsteiles (15).

2. Servomotor nach Anspruch 1, dadurch gekennzeichnet, dass jeder Anschlagsabschnitt (16) um ein Endteil (26) verlängert wird, das seinen Halt (27) auf einer Auflagefläche (23) des zentralen Aufnahmebereiches (20) der radialen Ausnehmung (18) findet.

3. Servomotor nach einem der Ansprüche 1 oder 2, dadurch gekennzeichnet, dass jeder Anschlagsabschnitt (16) des Anschlagsteiles (15) durch ein im wesentlichen geradliniges Teil gebildet wird, an dessen beiden Enden sich jeweils eine Rundung (25, 25') anschliesst, wobei der zentrale Aufnahmebereich (20) der radialen Ausnehmung (18) geringfügig grösser ist als die Gesamtentfernung (λ) zwischen den äusseren Rändern der Rundungen (25, 25').

4. Servomotor nach einem der vorhergehenden Ansprüche, dadurch gekennzeichnet, dass das Anschlagsteil (15) im wesentlichen eben ist.

5. Servomotor nach Anspruch 4, dadurch gekennzeichnet, dass jede der radialen Ausnehmungen (18) eine im wesentlichen konstante axiale Breite aufweist, die etwas über der Dicke des Drahtes des Anschlagsteiles (15) liegt.

6. Servomotor nach Anspruch 5, dadurch gekennzeichnet, dass die beiden radialen Ausnehmungen (18) symmetrisch bezüglich einer ersten mittig verlaufenden, axialen Ebene (A) der Nabe (2) sind.

7. Servomotor nach Anspruch 6, dadurch gekennzeichnet, dass die radialen Ausnehmungen (18) bezüglich einer zweiten mittig verlaufenden, axialen Ebene (B) der Nabe (2) symmetrisch sind, wobei diese zweite Ebene (B) senkrecht zur ersten mittig verlaufenden, axialen Ebene (A) ist.

**Claims**

1. Brake booster, comprising a booster piston (1) provided with a tubular hub (2) enclosing a distribution valve means (4) which is actuated by a valve plunger (5) which is movable axially in said hub and which is coupled to an input rod (7) of the booster, and a stop key (15) for the plunger (5) which is made from metal wire and which is mounted elastically on said hub (2) with at least one stop portion (16) of said key (15) housed in a radial cavity (18) of said hub (2) so as to co-operate in engagement with said plunger (5), characterized in that the hub (2) comprises two opposite radial cavities (18) and in that said key (15) comprises two stop portions (16) facing one another which are joined by an intermediate arch (17), each radial cavity (18) comprises a central portion (20) for housing the stop portion (16) of said key (15) and an access portion opening outwards (19), the transverse distance (α) between connecting zones (24) between said central portions (20) and said access portions (19) of said two cavities (18) being greater than the spacing (β) between said portions (16) facing one another of said key (15).

2. Booster according to Claim 1, characterized in that each stop portion (16) is extended by an end portion (26) which comes to bear (27) against a bearing surface (23) of said central housing portion (20) of said radial cavity (18).

3. Booster according to Claim 1 or Claim 2, characterized in that each stop portion (16) of said key (15) consists of a strand portion which is essentially straight and is extended at each end by a bend (25, 25'), said central housing portion (20) of said radial cavity (18) having a height which is slightly greater than the overall distance (λ) between the outer edges of said bends (25, 25').

4. Booster according to one of the preceding claims, characterized in that said key (15) is essentially flat.

5. Booster according to Claim 4, characterized in that said radial cavities (18) each have an axial width which is essentially constant and which is slightly greater than the thickness of the wire of said key (15).

6. Booster according to Claim 5, characterized in that said two radial cavities (18) are symmetrical relative to a first axial middle plane (A) of said hub (2).

7. Booster according to Claim 6, characterized in that said radial cavities (18) are symmetrical relative to a second axial middle plane (B) of said hub (2) which is perpendicular to said first axial middle plane (A).

FIG.1